(19) Europäisches Patentamt / European Patent Office / Office européen des brevets

(11) **EP 3 156 207 B1**

(12) **EUROPÄISCHE PATENTSCHRIFT**

(45) Veröffentlichungstag und Bekanntmachung des Hinweises auf die Patenterteilung:
**01.05.2019   Patentblatt 2019/18**

(21) Anmeldenummer: **15190200.4**

(22) Anmeldetag: **16.10.2015**

(51) Int Cl.:
*B29C 65/02* (2006.01)     *B29C 65/06* (2006.01)
*B29C 65/38* (2006.01)     *B29C 65/40* (2006.01)
*C09J 5/02* (2006.01)     *C08L 77/00* (2006.01)
*C08F 22/06* (2006.01)     *C08F 222/08* (2006.01)
*C08L 25/08* (2006.01)     *C08L 35/00* (2006.01)
*C08L 77/02* (2006.01)     *C08J 5/12* (2006.01)

(54) **VERFAHREN ZUM SCHWEISSEN VON ZWEI POLYAMID-KUNSTSTOFFEN MITTELS VERWENDUNG EINES PRIMERS, GEGENSTAND HERGESTELLT NACH BESAGTEM VERFAHREN**

METHOD FOR WELDING TWO POLYAMIDE PLASTICS BY MAKING USE OF A PRIMER, ARTICLE OBTAINABLE BY SAID METHOD

PROCÉDÉ DE SOUDAGE DE DEUX MATIÈRES PLASTIQUES EN POLYAMIDE FAISANT USAGE D'UN PRIMAIRE, ARTICLE OBTENU PAR CE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.04.2017   Patentblatt 2017/16**

(73) Patentinhaber: **Henkel AG & Co. KGaA
40589 Düsseldorf (DE)**

(72) Erfinder:
• **WALTER, Pablo
  80801 München (DE)**
• **FRIEDRICH, Norman
  80636 München (DE)**
• **GONZALEZ, Lina
  82008 München (DE)**
• **LÜTZEN, Hendrik
  80637 München (DE)**
• **HÄRTIG, Thomas
  80796 München (DE)**

(56) Entgegenhaltungen:
**EP-A1- 1 757 431     EP-A1- 2 669 076
WO-A1-02/070605     WO-A1-02/090425**

**Beschreibung**

Die vorliegende Erfindung bezieht sich auf ein Verfahren zum Verschweißen von zwei Polyamid-Kunststoffen unter Verwendung eines Primers, wobei der Primer mindestens ein Polymer synthetisiert aus mindestens einem Maleinsäureanhydrid oder Maleinsäureanhydrid-Derivat enthält. Darüber hinaus betrifft die vorliegende Erfindung entsprechend verschweißte Produkte.

Aus dem Stand der Technik sind verschiedene Verfahren bekannt, um zwei oder mehrere Substrate, die aus Kunststoffen, wie zum Beispiel aus Polyethylen (PE), Polyacrylaten oder Polyamid (PA) bestehen, miteinander zu verbinden. Dabei gibt es sowohl mechanische Verbindungsmöglichkeiten, wie beispielsweise das Rasten oder Schrauben, oder Klebeverfahren. Alternativ dazu können Kunststoffe auch miteinander verschweißt werden. Beim Schweißen handelt es sich um ein Fügeverfahren für eine nicht lösbare, stofflich physikalische Verbindung im Allgemeinen artgleicher Kunststoffe, wie z.B. PE mit PE oder zwei identische PAs miteinander. Dabei werden unter identischen PAs zwei Polyamide versanden, die sich sowohl in ihrer Wiederholeinheit als auch in der Art des Füllstoffs nicht unterscheiden. Artgleiche thermoplastische Kunststoffe sind solche Polymere, die sich hinsichtlich ihrer Molekularstruktur, Schmelztemperatur, der Schmelzviskosität und ihres Wärmeausdehnungskoeffizienten nicht wesentlich unterscheiden und grundsätzlich bedingt miteinander mischbar sind. Meistens handelt sich es bei artgleichen Kunststoffen um Kunststoffe einer identischen Polymer-Basis bzw. um identische Kunststoffe.

Es sind verschiedenste Verfahren bekannt, um zwei oder mehrere artgleiche Kunststoffe miteinander zu verschweißen. Dabei können unterschiedlichste Schweißverfahren eingesetzt werden, wie beispielsweise Infrarot-Schweißen, Infrarot/Vibrationsschweißen, Ultraschallschweißen oder Heizelementschweißen. Diese Verfahren zum Verschweißen von artgleichen Kunststoffen basieren darauf, dass die jeweiligen Kunststoffe im Bereich der Schweißzone aufgeschmolzen werden und dass sich die Stoffe in dieser Zone stoff- und kraftschlüssig miteinander verbinden.

Diese Schweißverfahren funktionieren immer so lange gut, solange artgleiche bzw. identische Kunststoffe miteinander verbunden werden sollen. Sobald allerdings zwei Kunststoffe miteinander verschweißt werden sollen, die artungleich bzw. unverträglich miteinander sind, kann keine dauerhafte Verbindung mit hoher mechanischer Festigkeit zwischen den beiden Substraten hergestellt werden. Für den Fall des Versuches eines direkten Verschweißens zweier unterschiedlicher Polyamid-Kunststoffe mit einem aus dem Stand der Technik bekannten Schweißverfahren werden meist sehr geringe und ungenügende Festigkeiten erzielt.

Bisher konnten entsprechende unterschiedliche Polyamid-Kunststoffe lediglich durch eine mechanische Verbindung oder ein Klebeverfahren miteinander verbunden werden, um hohe Festigkeiten zu erhalten. Der Nachteil an einer mechanischen Verbindung ist die komplizierte Anbringung, die punktuelle Materialbelastung als auch die Notwendigkeit eines zusätzlichen mechanischen Verbindungsmittels. Des Weiteren können bei einer mechanischen Verbindung selten stoffschlüssige Verbindungen erreicht werden. Der Nachteil an einem Klebeverfahren ist jedoch, dass die Endfestigkeit der Verbindung erst nach einem langen Zeitraum, der bis zu mehreren Wochen betragen kann, erreicht wird. Des Weiteren erfordert das Verkleben von niederenergetischen Oberflächen meist eine aufwendige Vorbehandlung der Fügepartner. Zusätzlich ist eine Klebeverbindung häufig aufgrund der äußeren Witterung nicht unbegrenzt stabil. Außerdem ist die Bereitstellung einer sauberen Klebeverbindung häufig kompliziert und zeitaufwendig. Somit stellt die Verbindung mittels eines Schweißverfahrens für Kunststoffe die sauberste, schnellste und einfachste Lösung dar.

EP 1 757 431 A1 beschreibt ein Verfahren zum Verschweißen von zwei Polyamid-Kunststoffen, wobei mittels einer Oberflächen-Modifikation die Bindungsstärke der Polyamid-Kunststoffe verbessert werden soll. Dabei wird die Oberfläche gezielt durch Trihydroxybenzol und/oder Trihydroxybenzoesäure, gelöst in einem Lösungsmittel, modifiziert, wodurch die Oberfläche aktiviert wird, so dass in einem Schmelzschweißverfahren die Oberflächen der Polyamid-Kunststoffe gut bei der Rekristallisation der Polyamide miteinander verbunden werden.

In der WO 02/090425 A1 wird ein Schweißverfahren zum Verbinden von zwei Polyamidkunststoffen beschrieben, wobei die beiden zu verschweißenden Polyamid-Kunststoffe genau hinsichtlich der Schmelztemperatur, der Viskosität und des Viskositätsverhaltens aufeinander abgestimmt werden müssen. Eine zentrale Rolle spielt dabei die Schmelze der ausgehenden Polyamid-Kunststoffe beim Schweißprozess.

Die Aufgabe der vorliegenden Erfindung bestand somit darin, ein einfaches Verfahren zum Verschweißen von zwei Polyamid-Kunststoffen miteinander zu finden, wobei möglichst hohe mechanische Festigkeiten erreicht werden sollten. Dabei sollte die Verbindung zwischen diesen unterschiedlichen Polyamid-Kunststoffen durch die Schweißnaht möglichst stabil und von Dauer sein.

Überraschenderweise wurde gefunden dass diese Aufgabe durch ein Verfahren zum Verschweißen von zwei Polyamid-Kunststoffen unter Verwendung eines Primers gelöst wird, wobei der Primer mindestens ein Polymer synthetisiert aus mindestens einem Maleinsäureanhydrid oder Maleinsäureanhydrid-Derivat enthält.

Durch die Verwendung eines Primers enthaltend mindestens ein entsprechendes Polymer konnten beim Verschweißen von zwei Polyamid-Kunststoffen besonders stabile und alterungsbeständige Verbindungen zwischen den Kunststoffen erhalten werden.

Die Fügepartner zum Verschweißen unter Verwendung eines erfindungsgemäßen Primers sind zwei Polyamid-Kunststoffe. Bei den zwei vorzugsweise unterschiedlichen Polyamid-Kunststoffen handelt es sich insbesondere um thermoplastische Polyamide. Zu den Thermoplasten auf Amid-Basis gehören beispielsweise Polyamid 6, ein Homopolymerisat aus epsilon-Caprolactam (Polycaprolactam); Polyamid 11, ein Polykondensat aus 11-Aminoundecansäure (Poly-11-aminoundecanamid); Polyamid 12, ein Homopolymerisat aus omega-Laurinlactam (Polylaurinlactam); Polyamid 6.6, ein Homopolykondensat aus Hexamethylendiamin und Adipinsäure (Polyhexamethylenadipamid); Polyamid 6.10, ein Homopolykondensat aus Hexamethylendiamin und Sebacinsäure (Polyhexamthylensebacamid); Polyamid 6.12 ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamthylenterephthalamid), Poly(p-phenylenterephthalamid) oder Poly(m-phenylenterephthalamid) aus Phenylendiamin und Terephthalsäure, Polyphthalamide PPA aus verschiedenen Diaminen und Terephthalsäure sowie Gemische davon.

Optisch transparente Polyamide umfassen mikrokristalline Polyamide enthaltend lineare aliphatische Dicarbonsäuren und cycloaliphatische Diamine, amorphe Polyamide enthaltend lineare aliphatische Dicarbonsäuren und cycloaliphatische Diamine und optional Lactame bzw. Aminocarbonsäuren, amorphe Polyamide enthaltend Terephthalsäure und cycloaliphatische oder verzweigte aliphatische Diamine und optional Lactame bzw. Aminocarbonsäuren oder amorphe Polyamide enthaltend Isophthalsäure und cycloaliphatische oder lineare oder verzweigte aliphatische Diamine und optional Lactame bzw. Aminocarbonsäuren. Geeignete optisch transparente Polyamide sind beispielsweise Amide aus Dodecandisäure und einem Isomerengemisch des 4,4'-Bis(aminocyclohexyl)-methans, aus Terephthalsäure und dem Isomerengemisch des 2,2,4- und 2,4,4-Trimethylhexamethylendiamins, aus Dodecandisäure und dem Isomerengemisch des 3,3'-Dimethyl-4,4'-bis(aminocyclohexyl)-methans, aus Laurinlactam, Isophthalsäure und dem Isomerengemisch des 3,3'-Dimethyl-4,4'-bis(aminocyclohexyl)-methans oder aus Tetradecandisäure und dem Isomerengemisch des 3,3'-Dimethyl-4,4'-bis(aminocyclohexyl)-methans oder aus epsilon-Caprolactam oder omega-Laurinlactam.

Bevorzugte Polyamide werden ausgewählt aus der Gruppe bestehend aus Polyamid 6, Polyamid 6.6, Polyamid 6.10, Polyamid 6.12, Polyamid 10.10, Polyamid 11, Polyamid 12, Polyamid 10.12, Polyphthalamiden, optisch transparenten Polyamiden oder Mischungen auf Basis dieser Polyamide. Besonders bevorzugte Polyamide sind ausgewählt aus Polyamid 6, Polyamid 6.6, Polyamid 12, Polyphthalamiden, optisch transparenten Polyamiden sowie deren Mischungen. Die jeweiligen Polyamid-Kunststoffe können auch weitere Komponenten enthalten, z.B. Füllstoffe, wie Glasfasern, Pigmente, mineralische Partikel, Farbstoffe, Rheologiehilfsmittel, Entformungshilfen oder Stabilisatoren. Vorzugsweise besteht der jeweiligen Polyamid-Kunststoff zu mehr als 40 Gew.-%, insbesondere zu mehr als 60 Gew.-%, vorzugsweise zu mehr als 70 Gew.-%, bevorzugt zu mehr als 90 Gew.-% aus den genannten Polyamiden, jeweils bezogen auf den gesamten Polyamid-Kunststoff (mit Füllstoffen). Vorzugsweise besteht der jeweilige Polyamid-Kunststoff zu mehr als 90 Gew.-%, insbesondere zu mehr als 95 Gew.-%, bevorzugt zu mehr als 98 Gew.-% aus den genannten Polyamiden, jeweils bezogen auf den Polymeranteil des Polyamid-Kunststoffes (Gesamt Polyamid-Kunststoff ohne Füllstoffe). Bevorzugt weisen die jeweiligen Polyamid-Kunststoffe einen Gehalt an den genannten Polyamiden von 50 - 90 Gew.-%, insbesondere 60 - 80 Gew.-% auf, jeweils bezogen auf den gesamten Polyamid-Kunststoff (mit Füllstoffen).

Unter zwei identischen PAs werden zwei Polyamide verstanden, die sich sowohl in ihrer Wiederholeinheit als auch in der Art des Füllstoffs nicht unterscheiden. Die zwei zu fügenden Polyamid-Kunststoffe unterscheiden sich vorzugsweise in der Art und/oder Reihenfolge der Wiederholeinheit der Polyamid-Polymere bzw. im Aufbau der Polyamid-Polymere, auf denen die Polyamid-Kunststoffe basieren. Insbesondere unterscheiden sich die Polyamid-Polymere der Polyamid-Kunststoffe in der mittleren Anzahl der Kohlenstoffatome pro Aufbaueinheit um mehr als 1, insbesondere mehr als 2, vorzugsweise mehr als 6 Kohlenstoffatome. Z.B haben Polyamid 6 und Polyamid 6.6 jeweils 6 Kohlenstoffatome pro Aufbaueinheit, während Polyamid 6.12 neun Kohlenstoffatome pro Aufbaueinheit aufweist. Bevorzugt wird der erste Fügepartner aus den Polyamid-Kunststoffen aus der Gruppe aus Polyamid 6, Polyamid 6.6, Polyamid 6.10, Polyamid 6.12 ausgewählt, und bevorzugt wird der zweite Fügepartner aus dem Polyamid-Kunststoffen aus der Gruppe aus Polyamid 10.10, Polyamid 11, Polyamid 12 ausgewählt. Bevorzugt wird Polyamid 6 (Polycaprolactam) mit Polyamid 12 (Polylaurinlactam) verschweißt. Des Weiteren können sich die zu fügenden Kunststoffe bezüglich ihrer Füllstoffe und demzufolge ihres Kunststoffgehalts unterscheiden wie z.B. ein unterschiedlich stark mit Glasfaser gefülltes Polyamid mit einem mineralisch gefüllten Polyamid. Die zwei zu fügenden Polyamid-Kunststoffe können sich somit unterscheiden im Aufbau der Polyamid-Polymere und/oder bezüglich ihrer Füllstoffe und/oder bezüglich ihres Kunststoffgehalts, insbesondere im Aufbau der Polyamid-Polymere unterscheiden.

Ein weiterer wesentlicher Bestandteil der Erfindung ist die Verwendung mindestens eines Primers, vorzugsweise genau eines Primers. Der Primer enthält mindestens ein Polymer, welches als einpolymerisierte Monomere mindestens ein Maleinsäureanhydrid oder Maleinsäureanhydrid-Derivat enthält.

Der Primer stellt ein Schweißhilfsmittel dar, welches vorzugsweise als eine Vorbehandlungsschicht auf mindestens einem der zu verschweißenden Oberflächen der Substrate im Bereich der Fügezone aufgetragen wird. Der Primer ist nicht als Klebstoff, Reinigungsmittel oder ähnliches zu verstehen, vielmehr ist der Primer ein Hilfsmittel zum Schweißen, wodurch die Fügepartner in der Fügezone (bzw. Schweißzone) kompatibel zueinander gemacht werden und so in der Fügezone beim Fügen eine stoff- und kraftschlüssige Verbindung zwischen den zu verschweißenden Substraten entsteht.

Die Versuche haben gezeigt, dass durch die Verwendung eines entsprechenden Primers, enthaltend ein erfindungsgemäßes Polymer, die zwei unterschiedlichen Polyamid-Kunststoffe beim Schweißen in der Fügenaht kompatibilisiert werden konnten und somit eine stabile und dauerhafte Verbindung erzielt werden kann. Ohne die Verwendung eines entsprechenden Primers konnten nur sehr geringe Festigkeiten der geschweißten Verbindung erzielt werden. Vorzugsweise weisen die gefügten Substrate eine Zugfestigkeit von mehr als 5 MPa, insbesondere mehr als 7 MPa, bevorzugt mehr als 10 MPa auf. Die Zugfestigkeit wird mittels einer Zuggeschwindigkeit von 5 mm/s gemäß der in den Versuchen beschriebenen Versuchsdurchführung bestimmt.

Vorzugsweise wird das mindestens eine erste Polymer im Primer zumindest aus dem Monomer Maleinsäureanhydrid bzw. Maleinsäureanhydrid-Derivat synthetisiert. Dabei enthält das Polymer die Maleinsäureanhydrid-Gruppe in der einpolymerisierten Form. Ein Beispiel für ein Maleinsäureanhydrid-Derivat ist 1,2,3,6-Tetrahydrophthalsäureanhydrid, welches die relevante 5-gliedige Anhydrid-Gruppe umfasst. Bevorzugt handelt es sich bei dem ersten Polymer um ein Copolymer vorzugsweise enthaltend mindestens ein Styrol oder Styrol-Derivat und mindestens ein Maleinsäureanhydrid oder Maleinsäureanhydrid-Derivat. Neben dem Maleinsäureanhydrid bzw. Maleinsäureanhydrid-Derivat kann das Polymer auch weitere Monomere einpolymerisiert enthalten. Vorzugsweise enthält das Copolymer Monomere ausgewählt aus der Gruppe von Acrylarten und Methacrylaten (zusammen (Meth)acrylate), insbesondere (Meth)acrylate mit einem Alkylrest mit 1 bis 12 Kohlenstoffatomen, vorzugsweise 1 bis 4 Kohlenstoffatomen, vorzugsweise Methyl(meth)acrylat. Des Weiteren können auch funktionale Monomere mit Funktionalitäten wie beispielsweise Epoxid- oder Isocyanatgruppen, Carboxyl- oder Amingruppen, aber auch Alkoxysilangruppen, eingesetzt werden.

In einer besonderen Ausführungsform besteht das Copolymer aus einpolymerisiertem Styrol und Maleinsäureanhydrid. In einer anderen besonderen Ausführungsform besteht das Copolymer aus einpolymerisierten Styrol, Maleinsäureanhydrid und Methylmethacrylat. Bei diesen Varianten können die Monomere in unterschiedlichen molaren Verhältnissen eingesetzt werden.

In einer bevorzugten Ausführungsform des erfindungsgemäßen Copolymers ist das molare Verhältnis von Styrol zu Maleinsäureanhydrid 1:0,01 bis 1:2, bevorzugt 1:0,05 bis 1:1, besonders bevorzugt 1:0,1 bis 1:0,3. In einer weiteren bevorzugten Ausführungsform des erfindungsgemäßen Copolymers mit einpolymerisiertem Acrylat und/oder Methacrylaten, insbesondere Methylacrylat und/oder Methylmethacrylat, ist das molare Verhältnis von Styrol zu (Meth)acrylat zu Maleinsäureanhydrid 1:5:2 bis 1:0,2:0,01, insbesondere 1:2:1 bis 1:0,5:0,05 bevorzugt 1:1,5:0,5 bis 1:0,8:0,1, besonders bevorzugt 1:1:0,2.

Die Copolymere können in bekannter Weise aus den Monomeren synthetisiert werden. Zusätzlich können die Copolymere in einer Polymer-analogen Reaktion gepfropft sein. Besonders bevorzugte Reaktionspartner zum Pfropfen sind Alkohole, Thiole, Amine, Isocyanate, Anhydride, Carbonsäuren, insbesondere Alkohole, bevorzugt Alkohole mit 1 bis 6 Kohlenstoffatomen, wie Methanol und Isobutanol. Zum Pfropfen können die Maleinsäureanhydrid-Monomere bzw. Maleinsäureanhydrid-Einheiten im Polymer mit dem Reaktionspartner reagieren, insbesondere durch Alkohole verestert werden. Vorzugsweise reagieren bzw. verestern die Maleinsäureanhydrid-Gruppen nur partiell, insbesondere weniger als 70 % der Maleinsäureanhydrid-Gruppen. Bevorzugt sind 5 bis 70 % der Maleinsäureanhydrid-Gruppen verestert, insbesondere mit Methanol und/oder Isobutanol. Es kann auch bevorzugt sein, wenn die Maleinsäureanhydrid-Gruppen nicht umgesetzt sind und weiterhin als Anhydrid-Gruppen vorliegen. In der bevorzugten Ausführung können die Maleinsäureanhydrid-Gruppen auch teilweise hydrolysiert vorliegen. Eine komplette Umsetzung der Maleinsäureanhydrid-Gruppen kann zu einer Verminderung der Festigkeit der resultierenden Schweißverbindung führen.

Besonders vorteilhaft sind Polymere bzw. Copolymere, die einen Maleinsäureanhydrid-Gehalt von größer gleich 0,1 Gew.-%, insbesondere größer gleich 0,5 Gew.-%, bevorzugt größer gleich 4 Gew.-%, besonders bevorzugt größer gleich 8 Gew.-% bezogen auf das Polymer enthalten. In vorteilhafter Weise enthalten die Polymere einen Maleinsäureanhydrid-Gehalt von 0,1 - 50 Gew.-%, insbesondere 0,5 - 40 Gew.-%, bevorzugt 4 - 30 Gew.-%, besonders bevorzugt 8 - 26 Gew.-% bezogen auf das Polymer. Polymere mit einem entsprechenden Maleinsäureanhydrid-Gehalt weisen besonders gute Festigkeiten der geschweißten Verbindung auf.

Des Weiteren sind Polymere bevorzugt, die eine Glasübergangstemperatur Tg (mittels DSC mit eine Heizrate von 10 K/min unter Stickstoff, insbesondere in Anlehnung an DIN EN ISO 11357-1:2010-3 und DIN EN ISO 11357-2:2014-07 bestimmt) von größer 30 °C, insbesondere größer 80 °C, besonders bevorzugt größer 100 °C aufweisen. Polymere mit einer entsprechenden Glasübergangstemperatur verbessern insbesondere die mechanischen Eigenschaften der Schweißverbindung.

Vorteilhafterweise haben die Polymere bzw. Copolymere ein gewichtsmittleres Molekulargewicht Mw von größer gleich 5000 g/mol, insbesondere größer gleich 50000 g/mol, bevorzugt größer gleich 100000 g/mol, besonders bevorzugt größer gleich 175000 g/mol. Bevorzugt haben die Polymere bzw. Copolymere ein gewichtsmittleres Molekulargewicht Mw im Bereich von 5000 - 2000000 g/mol, insbesondere von 50000 - 1000000 g/mol, bevorzugt von 100000 - 500000 g/mol. Polymere bzw. Copolymere mit einem entsprechenden gewichtsmittleren Molekulargewicht wirken sich positiv auf die Sprödität und Festigkeit der erhaltenen Verbindung aus. Das gewichtsmittlere Molekulargewicht kann mittels GPC gegen einen Polystyrol-Standard bestimmt werden.

Neben dem ersten erfindungsgemäßen Polymer kann der Primer vorzugsweise mindestens ein weiteres Polymer enthalten. Das mindestens eine weitere Polymer bzw. Copolymer ist vorzugsweise zu mindestens einem der beiden zu verschweißenden Kunststoffen und zum Primer-Polymer kompatibel. Besonders bevorzugt enthält der Primer mindestens ein Polyamid-Polymer, vorzugsweise eines der oben spezifizierten Polyamid-Polymere. Die Verwendung eines zusätzlichen Polymers neben dem erfindungsgemäßen Copolymer im Primer hat zu einer weiteren Verbesserung der Festigkeit geführt.

Als kompatibles weiteres Polymer wird vorzugsweise ein Polymer eingesetzt, welches zu einem, insbesondere zu beiden zu fügenden Kunststoffen und insbesondere auch zu dem oben genannten ersten erfindungsgemäßen Polymer eine gewichtete quadratische Distanz der Hansen-Parameter $(R_a)^2$ von kleiner 22 MPa, insbesondere von kleiner 17 MPa, bevorzugt von kleiner 15 MPa, besonders bevorzugt von kleiner 12 MPa aufweist.

Die gewichtete quadratische Distanz der Hansen-Parameter $(R_a)^2$ bestimmt sich gemäß der folgenden Formel:

$$(R_a)^2 = 4(\Delta\delta_D)^2 + (\Delta\delta_P)^2 + (\Delta\delta_H)^2$$

In dieser Formel ist $\delta_D$ der Hansen-Parameter für die Dispersionskräfte, $\delta_P$ der Hansen-Parameter für die Polarität und $\delta_H$ der Hansen-Parameter für die Wasserstoffbrückenbindungen. $\Delta\delta_D$, $\Delta\delta_P$ und $\Delta\delta_H$ stellen jeweils die Differenzen dieser Hansen-Parameter der zu vergleichenden Kunststoffe bzw. Polymere dar, z.B. $\Delta\delta_D = (\delta_{D1} - \delta_{D2})$ der Polymere 1 und 2. Die Bestimmung der Werte der einzelnen Hansen-Parameter $\delta_D$, $\delta_P$ und $\delta_H$ für die jeweiligen Kunststoffe bzw. Polymere erfolgt gemäß dem Buch "Hansen Solubility Parameters: A User's Handbook" von Charles M. Hansen (second edition; Taylor & Francis Group; 2007; ISBN-10 0-8493-7248-8). Dieser Quelle können bereits viele Werte einzelner Polymere entnommen werden. Gemäß der in diesem Buch beschriebenen Methode können die Hansen-Parameter vorzugsweise mit dem Programm HSPIP (4th Edition 4.1.07) aus der mitgelieferten Datenbank entnommen, oder, falls nicht vorhanden, mit der enthaltenen "DIY" - Funktionalität des Programms, vorzugsweise unter Verwendung des mitgelieferten neuronalen Netzes, wie in der Hilfe beschrieben, bestimmt werden. Das HSPIP Programm ist über die Fa. Steven Abbott TCNF Ltd erhältlich.

Der Gehalt des weiteren Polymers, insbesondere des Polyamid-Polymers, am Primer ist bevorzugt 0 - 40 Gew.-%, insbesondere 5 - 30 Gew.-%, besonders bevorzugt 10 - 20 Gew.-%, jeweils bezogen auf das Gesamtgewicht des Primers. Der Gehalt des weiteren Polymers, insbesondere eines Polyamid-Polymers, am Polymergehalt des Primers ist bevorzugt 5 - 70 Gew.-%, insbesondere 20 - 60 Gew.-%, besonders bevorzugt 30 - 50 Gew.-%, jeweils bezogen auf den Gesamtpolymeranteil des Primers (Primer ohne Lösungsmittel und ohne Füllstoffe).

Neben dem ersten Polymer und dem weiteren Polymer kann der Primer auch ein Lösungsmittel, insbesondere ein organisches Lösungsmittel enthalten. Vorzugsweise enthält der Primer einen Lösungsmittelgehalt von 10 - 90 Gew.-%, insbesondere 50 - 85 Gew.-%, besonders bevorzugt 60 - 80 Gew.-%, jeweils bezogen auf das Gesamtgewicht des Primers.

Geeignete Lösungsmittel sind alle gängigen Lösungsmittel, wie zum Beispiel Wasser, Alkohole, Ketone, wie Mehylisobutylketon (MIBK) oder Cyclohexanon (CH), Ether, wie Diethylether oder Tetrahydrofuran (THF), Ester, wie Essigsäureethylester, oder Carbonate, wie Dimethyl- oder Dipropylcarbonat, oder Gemische daraus.

In einer bevorzugten Ausführungsform enthält der Primer organische Lösungsmittel. Besonders bevorzugt sind Lösungsmittel mit einem Dampfdruck bei 20 °C von 1 bis 600 hPa, insbesondere 2 bis 200 hPa, besonders bevorzugt 5 bis 20 hPa. Lösemittel mit einem entsprechenden Dampfdruck haben sich besonders vorteilhaft dabei herausgestellt, die Blasenbildung in der Primerschicht beim Abdampfen zu minimieren bzw. zu verhindern. Insbesondere bevorzugt enthält der Primer ein Lösungsmittel ausgewählt aus Tetrahydrofuran (THF), Mehylisobutylketon (MIBK), Cyclohexanon (CH) und Gemische daraus, besonders bevorzugt enthält der Primer THF, Cyclohexanon oder eine Mischung aus MIBK und CH, ganz besonders bevorzugt enthält der Primer Cyclohexanon. Wenn eine Mischung aus Mehylisobutylketon und Cyclohexanon als Lösungsmittel eingesetzt wird, enthält diese Mischung vorzugsweise 10 - 50 Gew.-%, insbesondere 20 - 35 Gew.-% Cyclohexanon, jeweils bezogen auf die gesamte Mischung an Lösungsmittel.

Wenn organische Lösungsmittel eingesetzt werden, beträgt der Gesamtpolymergehalt des Primers vorzugsweise 10 - 90 Gew.-%, insbesondere 15 - 50 Gew.-%, besonders bevorzugt 20 - 40 Gew.-%, jeweils bezogen auf das Gesamtgewicht des Primers. Der Gesamtpolymergehalt entspricht dem Gehalt aller im Primer verwendeten Polymere, insbesondere der erfindungsgemäßen Polymere und der oben beschriebenen weiteren Polymere.

In einer anderen bevorzugten Ausführungsform liegt der Primer in Form einer wässrigen Dispersion oder Emulsion vor. In diesem Fall ist das erfindungsgemäße Polymer bzw., wenn vorhanden, die weiteren Polymere in Wasser emulgiert oder dispergiert. In diesem Fall beträgt der Gesamtpolymergehalt des Primers vorzugsweise 5 - 90 Gew.-%, insbesondere 20 - 70 Gew.-%, besonders bevorzugt 30 - 55 Gew.-%, jeweils bezogen auf das Gesamtgewicht des Primers. Für die wässrige Dispersion/Emulsion ist es vorteilhaft, dass die Polymerkomponente im Wesentlichen nur aus dem erfindungsgemäßen Polymer und dem gegebenenfalls vorhandenen oben genannten weiteren Polymer, insbesondere nur aus dem erfindungsgemäßen Polymer besteht. Unter dem Begriff "im Wesentlichen aus" wird erfindungsgemäß verstanden, wenn die Polymerkomponente zu mehr als 95 Gew.-%, vorzugsweise mehr als 97 Gew.-%, ganz besonders bevorzugt mehr als 99 Gew.-% aus der erfindungsgemäßen Polymer und dem gegebenenfalls vorhandenen oben genannten weiteren Polymer, insbesondere nur aus dem erfindungsgemäßen Polymer besteht.

Neben dem erfindungsgemäßen Polymer, den oben genannten weiteren Polymeren und einem Lösungsmittel kann der Primer weitere Komponenten enthalten, wie zum Beispiel Füllstoffe, (Fluoreszenz)-Farbstoffe und Pigmente, Entschäumungshilfen, Benetzungshilfsmittel, Stabilisatoren oder Weichmacher. Abgesehen von Farbstoffen und Pigmenten ist der Primer jedoch vorzugsweise im Wesentlichen frei von weiteren Komponenten, insbesondere im Wesentlichen frei von jeglichen anderen Komponenten. Unter dem Begriff "im Wesentlichen frei von" wird erfindungsgemäß verstanden, wenn der Primer weniger als 5 Gew.-%, vorzugsweise weniger als 1 Gew.-%, ganz besonders bevorzugt weniger als 0,1 Gew.-% der jeweiligen Substanzen, insbesondere nicht die jeweiligen Substanzen enthalten.

Bei dem erfindungsgemäßen Verfahren zum Verschweißen von zwei Polyamid-Kunststoffen wird ein Primer verwendet, wobei der Primer mindestens ein Polymer synthetisiert aus mindestens einem Maleinsäureanhydrid oder Maleinsäureanhydrid-Derivat enthält.

Der Primer dient bei diesem Verfahren als Hilfsmittel für die Verschweißung der beiden unterschiedlichen Kunststoffe aus Polyamid durch jeweiliges Aufschmelzen. Durch den verwendeten Primer enthaltend ein erfindungsgemäßes Polymer kann eine Verträglichkeit zwischen den beiden Fügepartnern hergestellt werden, wodurch eine stabile und dauerhafte, stoffschlüssige Verbindung zwischen den beiden Kunststoffen hergestellt werden kann.

Der Primer kann durch verschiedenste Verfahren auf die Oberfläche eines oder beider Fügepartner aufgetragen werden. So kann die Auftragung zum Beispiel durch eine Dosiervorrichtung, durch eine Nadel und Dosierroboter, durch Spritzgießen, durch Extrusion, durch Folienauftrag, durch Auftrag als Hotmelt, durch Aufsprühen, durch Aufstreichen oder durch Dippen erfolgen. Dabei kann der Primer entweder nur auf eine Oberfläche oder auf beide Oberflächen der zu verschweißenden Substrate aufgetragen werden. Vorzugsweise wird der Primer nur auf eine Oberfläche aufgetragen. In dem Fall des Verschweißens mittels einer Folie kann die Folie zwischen die Substrate gelegt werden.

Für den Fall, dass der Primer Lösungsmittel enthält, wird der Primer nach dem Auftrag auf eine oder beide Oberflächen vorzugsweise so lange getrocknet bis das Lösungsmittel soweit verdampft ist, dass eine nicht klebrige, dimensionsstabile Primerschicht entstanden ist. Vorzugsweise wird der Primer nach dem Auftrag für mindestens eine Stunde, bevorzugt für mindestens 12 Stunden getrocknet. Insbesondere ist der Primer bereits nach wenigen Sekunden und bis zu mehreren Wochen schweißbar.

Vorzugsweise erfolgt der Auftrag auf eine oder beide Oberflächen der zu verschweißenden Substrate in der Weise, dass der Primer eine Schichtdicke von 1 $\mu$m bis 5000 $\mu$m, insbesondere 10 - 3000 $\mu$m, bevorzugt 50 - 1000 $\mu$m, besonders bevorzugt 100 - 500 $\mu$m hat. Falls ein Lösungsmittel im Primer enthalten war, bezieht sich die Schichtdicke auf den vom Lösemittel getrockneten Primer.

Nach dem Auftragen auf eine bzw. beide Oberflächen der zu verschweißenden Substrate und gegebenenfalls dem Trocknen des Primers können die zu verschweißenden Substrate mit einem gängigen Schweißverfahren miteinander verbunden werden. Das Schweißen von Kunststoffen erfolgt im Allgemeinen durch eine lokale Plastifizierung der Fügepartner in der Fügeebene und das Fügen unter Druck. Die Prozessparameter sind so zu wählen, dass ein ausgeprägtes Quetschfließen der Schmelze zu einer optimalen Verbindung der Fügepartner in der Fügeebene führt. Die Erwärmung kann über Konvektion, Kontakterwärmung, Strahlung oder Reibung erfolgen. Der unterschiedliche Energieeintrag zum Plastifizieren kann auf vielfältige Art und Weise erfolgen und hat zu verschiedenen Prozessen zum Schweißen von Kunststoffen geführt. Geeignete Schweißverfahren sind beispielsweise:

- Heißgasschweißen [HG](Hot gas welding)
  Konvektive Erwärmung mit einem heißen Gasstrom, im allgemeinen Luft, zweistufiger Prozess
- Heizelementschweißen [HE] (Hot plate welding) Kontakterwärmung, zweistufiger Prozess
- Ultraschallschweißen [US] (Ultrasonic welding)
  Erwärmung durch Reibung, eine transversale Welle im Ultraschallbereich führt zu einer Erwärmung in der Grenzschicht, einstufiger Prozess
- Hochfrequenzschweißen [HF] (High frequency welding)
  Erwärmung durch innere Reibung, polare Moleküle orientieren sich entsprechen eines hochfrequenten Magnetfelds, einstufig, nur für polare Kunststoffe und Folien eingesetzt
- Vibrationsschweißen [VIB] (Friction welding: Linear; Orbital; Spin; Angle)
  Erwärmung durch Reibung, einstufiger Prozess
- Laserschweißen [LW] (Laser welding: Kontur, Simultan, Quasisimultan, Maske)
  Erwärmung durch Strahlung, Strahlung kohärent, Lasertransmissionsschweißen, im Allgemeinen einstufig (zweistufig möglich)
- Infrarotschweißen [IR] (Infrared welding)

Erwärmung über Strahlung, Strahlung inkohärent, zweistufig

Die oben angeführten Schweißverfahren können gegebenenfalls auch kombiniert werden wie zum Beispiel das Infrarotschweißen mit dem Vibrationsschweißen. Besonders bevorzugt erfolgt das Verschweißen der Polyamid-Kunststoffe durch ein Schweißverfahren ausgewählt aus Heizelementschweißen, Wärmekontakt- oder Wärmeimpulsschweißen, Warmgas- oder Heissgasschweißen, Vibrationsschweißen, Mikrowellen- oder Induktionsschweißen, Laserstumpf- oder Laserdurchstrahlschweißen, Infrarotschweißen, Ultraschallschweißen, sowie Kombinationen daraus, insbesondere ausgewählt aus Heizelementschweißen, Vibrationsschweißen, Infrarotschweißen, Ultraschallschweißen, sowie Kombinationen daraus, bevorzugt ausgewählt aus Infrarotschweißen, Ultraschallschweißen, sowie Kombinationen daraus.

Besonders bevorzugt ist ein Verfahren zum stoffschlüssigen Fügen der zwei Kunststoffe unter Verwendung des Primers, beinhaltend die folgenden Schritte.

- Bereitstellen des ersten Kunsstoffes aufweisend eine erste Fügezone,
- Bereitstellen des zweiten Kunststoffes aufweisend eine zweite Fügezone,
- Vorwärmen der ersten Fügezone,
- Auftragen des Primers auf die vorgewärmte erste Fügezone, insbesondere bei lösungsmittelfreien Primern,
- In-Kontakt-bringen der mit dem Primer versehenen ersten Fügezone mit der zweiten Fügezone,
- Stoffschlüssiges Verbinden der ersten Fügezone mit der zweiten Fügezone insbesondere durch den Einsatz üblicher Schweißverfahren von Kunststoffen wie beispielsweise dem Infrarotschweißen, Heizelementschweißen, Warmgasschweißen, Vibrationsschweißen, Ultraschallschweißen.

Für das Schweißen von Kunststoffen kann allgemein das Verständnis der DIN 1910-3:1977-09 angewendet werden. Mithin kann darunter ein stoffschlüssiges Verbinden von thermoplastischen Kunststoffen unter Zuhilfenahme von Wärme oder/und Druck verstanden werden. Die Erwärmung kann beispielsweise auf Basis von Kontakterwärmung (Schweißen durch festen Körper), Konvektionserwärmung (Schweißen durch Warmgas), Strahlungserwärmung (Schweißen durch Strahl) und Erwärmung durch Reibung (Schweißen durch Bewegung) sowie das Schweißen durch elektrischen Strom erfolgen.

In einer vorteilhaften Weiterbildung kommt ein Primer zum Einsatz, der derart ausgewählt und auf das Verfahren abgestimmt ist, dass das Auftragen auf eine erwärmte und/oder heiße Fügezone mit einer Temperatur, die kleiner ist als die Zersetzungstemperatur der Polymere im Primer, keinen Einfluss auf die innere chemische Vernetzung des Primers hat.

Vorteilhaft ist es, die erste Fügezone des ersten Kunststoffes vorzuwärmen. Für das Vorwärmen können dem Fachmann bekannte und sich für den Einsatzzweck eignende Hilfsmittel und Techniken zum Einsatz kommen. Insbesondere eignet sich der Einsatz von Warmgas oder Plasma zur Vorwärmung. Denkbar ist auch eine Vorwärmung mittels Bestrahlung, insbesondere Infrarotstrahlung oder Laserstrahlung. Auch kann ein Heizelement oder ein beheiztes Werkzeug zum Einsatz kommen, um die erste Fügezone vorzuwärmen. Schließlich ist auch ein Vorwärmen in einem Ofen oder einem beheizten Raum denkbar. Denkbar ist eine Vorwärmung des gesamten Kunststoffes und somit auch besagter Fügezone. Alternativ oder zusätzlich ist aber auch eine Vorwärmung lediglich der Fügezone selbst möglich.

In einer vorteilhaften Weiterbildung liegt der Abstand der Heizvorrichtung während der Vorwärmung zum Kunststoff, insbesondere zur vorzuwärmenden ersten Fügezone, insbesondere des wärmeabgebenden Bereichs der Heizvorrichtung oder des wärmeauslösenden Bereichs der Heizvorrichtung oder der zur vorzuwärmenden wirksamen Oberfläche der Heizvorrichtung oder die hinsichtlich der ersten Fügezone gegenüberliegenden Bereich der Heizvorrichtung in einem Bereich von 0,5 mm bis 100 mm, vorzugsweise im Bereich von 1 mm bis 60 mm. Denkbar ist alternativ auch, dass eine Erwärmung durch und/oder bei Kontaktierung insbesondere der ersten Fügezone durch das Heizelement der Heizvorrichtung erfolgt.

Ein weiterer Vorteil ist die Auswahl des Kunststoffes für den ersten Fügepartner und die Einstellung der Verfahrensparameter auf den ersten Kunststoff derart, dass die erste Fügezone beim Vorwärmen aufgeschmolzen wird und dass beim Vorwärmen eine Schmelzeschicht in der ersten Fügezone erzeugt wird. Die Dicke der Schmelzeschicht liegt in einer bevorzugten Ausführungsform vorzugsweise im Bereich von 0,05 mm bis 6 mm, besonders bevorzugt im Bereich von 0,1 mm bis 5 mm. Eine derartige Schmelzeschicht kann zu einer besseren Adhäsion und/oder Diffusion und/oder Wechselwirkung der Moleküle führen und in Verbindung mit einem gewissen Fluss zu einer besseren Verbindungsschicht. Befindet sich die Grenzschicht des ersten Kunststoffs im schmelzeflüssigen Zustand, kann es mit dem Primer zu Wechselwirkungen bis hin zu chemischen Bindungen kommen. Die Schmelzschicht kann insbesondere abhängig sein von der Bauteilgeometrie und der jeweiligen Bauteilauslegung. Vorzugsweise sind die Verfahrensparameter derart eingestellt und/oder gewählt, dass es zu keiner Verformung der Bauteile kommt. Bevorzugt ist ein Ausgleich von Temperaturunterschieden zwischen der Fügezone und dem aufzutragenden Primer durch geeignete Maßnahmen und/oder Verfahrensschritte vorgesehen. Dabei ist es insbesondere denkbar den Primer vorzuwärmen, um den Temperaturunterschied zwischen dem vorzugsweise thermoplastischen Primer und der ersten Fügezone zu reduzieren. Dies kann beispielsweise der schnellen Abkühlung der ersten Fügezone zwischen den Prozessschritten entgegenwirken.

Optional erfolgt vorzugsweise vor dem Schritt des Vorwärmens der ersten Fügezone eine Vorbehandlung der ersten Fügezone. Alternativ oder zusätzlich kann auch eine Vorbehandlung der zweiten Fügezone erfolgen. Als mögliche Vorbehandlung ist beispielsweise das Reinigen mittels eines Lösungsmittels oder eines beispielsweise alkalischen Kunststoffreinigers denkbar. Auch kann eine mechanische Vorbehandlung zum Einsatz kommen, insbesondere mittels Kratzen, Schmirgeln, Bürsten oder Strahlen. Denkbare chemische Vorbehandlungen sind insbesondere das Beizen oder der Einsatz reaktiver Gase. Darüber hinaus könnte sich der Einsatz einer thermischen, chemischen oder/und physikalischen Vorbehandlung als zweckmäßig erweisen, insbesondere mittels Gasflamme oder Plasmabogen. Alternativ oder zusätzlich kann eine elektrische Vorbehandlung mittels Corona-entladung, bei der die erste Fügezone und/oder die zweite Fügezone einer elektrischen Corona-entladung ausgesetzt wird damit an der entsprechenden Oberfläche polare Moleküle entstehen. Eine weitere Möglichkeit ist die Plasmabehandlung, vorzugsweise unter Einsatz einer Plasmadüse für die Vorbehandlung der Fügezone, insbesondere um eine Aktivierung und/oder Reinigung der entsprechenden Oberfläche zu erreichen. Gleichwohl kann sich auch eine Beschichtung mittels Plasma als zweckmäßig erweisen. Eine weitere Möglichkeit ist das Beflammen der Fügezone zur Erhöhung der Oberflächenspannung bei geeigneten Kunststoffen. Eine weitere Art der Vorbehandlung ist die Bestrahlung mittels UV-Strahlen, Elektronenstrahlen, radioaktiven Strahlen oder mittels Laser. Schließlich kann die Vorbehandlung in Form einer Beschichtung erfolgen, insbesondere durch einen Anstrich oder einen Haftvermittler. Denkbar ist auch eine Vorbehandlung des ersten Kunststoffes oder der Fügezonen des ersten Kunststoffes in einem größeren zeitlichen Abstand vor dem Vorwärmen. So ist beispielsweise denkbar, die Vorbehandlung schon im Rahmen des Fertigungsprozesses des ersten Kunststoffes vorzunehmen, um im erfindungsgemäßen Verfahren den vorbehandelten Kunststoff weiterverarbeiten zu können.

Der Auftrag des Primers ist auf unterschiedliche Art und Weise denkbar. Beispielsweise und insbesondere im industriellen Bereich ist der Auftrag mittels einer automatisierten Auftragshilfe, insbesondere mittels eines Dosierroboters denkbar. Selbiger kann dabei mit einem Nadel und/oder einem Höhensensor ausgerüstet sein, um komplexe Dosierungen durchführen zu können. Auch kann der Auftrag des Primers mittels Spritzgießen erfolgen, indem der Primer in einer Spritzgießmaschine plastifiziert und in die der erste Kunststoff mit der ersten Fügezone enthaltende Form unter Druck eingespritzt wird. Alternativ ist ein Folienauftrag denkbar, wobei in einem ersten Schritt mittels Folienblasen oder Flachfolienextrusion zunächst eine Folie aus dem Primer hergestellt wird. Anschließend kann die Folie beispielsweise mittels eines Schneid- oder Stanzverfahrens in eine beliebige Form zugeschnitten und in einem weiteren Schritt nach dem genannten Vorwärmen auf die erste Fügezone aufgebracht werden. Hierbei hat sich der Einsatz von Folien/Platten mit einer Stärke im Bereich von 1 $\mu$m - 5000 $\mu$m als zweckmäßig erwiesen. Weitere denkbare Auftragsmöglichkeiten sind das Extrusionsschweißen, bei dem der Primer in Form eines Schweißdrahtes vorliegt oder in einem Extruder aufgeschmolzen und in Schmelze auf die erste Fügezone appliziert werden kann. Auch ist die Bereitstellung des Primers in Form eines Schweißdrahtes möglich, um eine Applikation mittels Heißluftschweißen zu ermöglichen. Eine weitere Möglichkeit ist das Aufbringen des Primers mittels eines Sprühverfahrens. Auch beim Aufbringen beim Spritzguss ist eine Vorbehandlung oder/und Vorwärmung und/oder lokal unterschiedliche Temperierung des Spritzgießwerkzeug möglich. Selbstverständlich sind auch andere, dem Fachmann bekannte und sich für den spezifischen Anwendungsfall eignende Auftragsarten denkbar.

Ein weiterer Vorteil ist die weitere Erwärmung oder Erwärmung der ersten Fügezone während des Auftrags des Primers, insbesondere um einen Temperaturabfall der ersten Fügezone zwischen dem Vorwärmen und dem Auftragen des Primers zu vermeiden. Dies kann durch den oben beschriebenen Verfahrensschritt zum Vorwärmen erfolgen, welcher der Einfachheit halber während des Auftrags fortgeführt werden kann. Alternativ oder zusätzlich ist eine zusätzliche Erwärmung insbesondere mittels eines weiteren Verfahrensschrittes möglich. So kann sich beispielsweise als zweckmäßig erweisen, ein simultanes Erwärmen der ersten Fügezone durchzuführen, beispielsweise mittels simultanen Bestrahlens der ersten Fügezone mit Strahlung, erzwungene Konvektion, Kontakterwärmung während des Auftrages, um einen Temperaturabfall der ersten Fügezone nach dem Vorwärmen zu vermeiden.

In einer vorteilhaften Weiterbildung wird der Primer derart aufgebracht, das eine Verbindungsschicht mit einer Dicke im Bereich von 1 $\mu$m bis 5 mm, vorzugsweise im Bereich von 10 $\mu$m bis 3 mm auf der erste Fügezone angeordnet ist. Unter der Dicke der Verbindungsschicht ist dabei die Materialdicke der Verbindungsschicht auf der ersten Fügezone zu verstehen.

Ein weiterer Vorteil ist das Auftragen des Primers mittels einer Dosiervorrichtung auf die erste Fügezone unter Relativbewegung zwischen erster Fügezone und der Dosiervorrichtung, wobei mittels einer Heizvorrichtung die erste Fügezone, auf welche der Primer aufgetragen wird, unter Relativbewegung zwischen erster Fügezone und Heizvorrichtung, vor dem Auftrag des Primers vorgewärmt wird, wobei der Auftrag des Primers über die Dosiervorrichtung im vorgewärmten Zustand der ersten Fügezone erfolgt.

Hierbei hat es sich als besonders vorteilhaft erwiesen, dass die Heizvorrichtung bei der Vorwärmung an der ersten Fügezone mit einer Geschwindigkeit im Bereich von 10 mm/min bis 100 m/min, vorzugsweise im Bereich von 10 mm/min bis 30 m/min vorbeigeführt wird.

Ferner kann es von Vorteil sein, dass die Heizvorrichtung der Dosiervorrichtung vorzugsweise in einem definierten und konstanten Abstand voreilt. Insbesondere ist eine derartige Durchführung des Verfahrens von Vorteil, bei der der Primer mittels einer Dosiervorrichtung auf die erste Fügezone unter Relativbewegung von Dosiervorrichtung und erster Fügezone im Bereich von 10 mm/min bis 100 m/min, vorzugsweise im Bereich von 10 mm/min bis 30 m/min aufgetragen wird, wobei mittels einer Heizvorrichtung besagte Fügezone, auf welche der Primer aufgetragen wird, unter Relativbewegung von Heizvorrichtung und erster Fügezone vor dem Auftrag des Primers vorgewärmt wird, wobei die Heizvorrichtung der Dosiervorrichtung oder einer Düse der Dosiervorrichtung zum Auftragen des Primers in einem zeitlichen Abstand im Bereich von 0,1-10 s vorzugsweise simultan voreilt.

Hierbei hat es sich als besonders vorteilhaft erwiesen, eine Beschichtungseinheit bestehend aus Dosiervorrichtung und Heizvorrichtung einzusetzen. Unter einer Beschichtungseinheit kann dabei insbesondere eine Einheit verstanden werden, die eine feste Verbindung von Heizvorrichtung und Dosiervorrichtung vorsieht, so dass die Heizvorrichtung der Dosiervorrichtung in vorzugsweise einem definierten und konstanten Abstand bei der Relativbewegung voreilt, um sicherzustellen, dass die erste Fügezone unmittelbar vor dem Auftrag des Primers vorgewärmt wird. Selbstverständlich ist hierbei auch eine Einstellbarkeit des Abstandes oder bei konvektiver Vorwärmung das Einstellen des Volumenstroms bzw. Düsendurchmessers des Mediums, insbesondere durch geeignete mechanische, elektromechanische oder auch pneumatisch betriebene Stellmittel denkbar.

Andererseits kann unter der Beschichtungseinheit auch eine Heizvorrichtung und eine Dosiervorrichtung als zwei völlig voneinander getrennte oder separierte Baugruppen verstanden werden, die jedoch die gleiche oder im Wesentlichen die gleiche Relativbewegung hinsichtlich des Kunststoffes eingehen, um sicherzustellen, dass der Auftragsort des Primers unmittelbar vor dem Auftrag des Primers vorgewärmt wird.

In einer vorteilhaften Weiterbildung gehen Heizvorrichtung und Dosiervorrichtung eine zwar im Wesentlichen gleiche primäre Relativbewegung oder Grundrichtung hinsichtlich des Kunststoffes ein, jedoch erfährt zumindest eine von beiden genannten Vorrichtungen zusätzlich zur besagten primären Relativbewegung eine zusätzliche Relativbewegung hinsichtlich des Kunststoffes. So kann beispielsweise die Heizvorrichtung und/oder die Dosiervorrichtung neben der primären Relativbewegung, in der beispielsweise auch der Auftrag des Primers erfolgen kann, eine oder mehrere sekundäre Relativbewegungen eingehen. Beispielsweise kann insbesondere die Heizvorrichtung und/oder die Dosiervorrichtung eine um die primäre Relativbewegung kreisende oder mäanderförmige sekundäre Relativbewegung eingehen oder erfahren.

Dabei kann der Kunststoff auf der einen Seite oder die Heizvorrichtung und Dosiervorrichtung oder beide Vorrichtungen zusammen als Beschichtungseinheit auf der anderen Seite bewegt werden. Dabei ist es möglich, dass die Heizvorrichtung und Dosiervorrichtung oder beide Vorrichtungen zusammen als Beschichtungseinheit auf der einen Seite bzw. der Kunststoff auf der anderen Seite stillstehen oder jeweils mit dem sich bewegenden Teil in abweichende Richtung bewegt werden.

In einer vorteilhaften Weiterbildung erfolgt eine primäre Relativbewegung in einer Geschwindigkeit in einem Bereich von 10 mm/min bis 100 m/min, vorzugsweise im Bereich von 10 mm/min bis 30 m/min, so dass beispielsweise insbesondere auch durch geeignete Gestaltung der Heizvorrichtung möglichst kurze Verweilzeiten des Kunststoffes innerhalb der Heizfläche der Heizvorrichtung ergeben, insbesondere in einem Bereich von 1-60 s. Hierunter kann der Bereich bzw. der Raum um die Heizvorrichtung verstanden werden, der einen Einfluss auf die Temperatur im Sinne einer Temperaturerhöhung, also einer Vorwärmung der ersten Fügezone des ersten Kunststoffes hat. So kann beispielsweise eine zu große Aufheizung und eine Kunststoffschädigung oder Kunststoffbeeinträchtigung vermieden werden.

Zudem kann es sich als vorteilhaft erweisen, insbesondere zur Anbindung der Dosiervorrichtung und/oder der Heizvorrichtung an/in bestehende Fertigungslinien, die Heizvorrichtung mit einer Busschnittstelle auszustatten, insbesondere eines Profibus, oder einer Realtime-Ethernet-Schnittstelle.

Nach dem Aufbringen besagten Primers ist vorgesehen, die zweite Fügezone mit der Primerschicht in Kontakt zu bringen. Hierbei kann sich eine Fixierung beider Kunststoffe zueinander als zweckmäßig erweisen, insbesondere mittels dem Fachmann bekannter Spannvorrichtungen oder ähnlicher Hilfsmittel zur Fixierung.

Natürlich kann optional vor dem Schritt des In-Kontakt-Bringens der zweiten Fügezone mit der Primerschicht eine Vorbehandlung der zweiten Fügezone erfolgen. Dabei sind insbesondere alle oberhalb beschriebenen Techniken für eine Vorbehandlung denkbar. Denkbar ist auch eine Vorbehandlung des zweiten Kunststoffes oder der Fügezonen des zweiten Kunststoffes in einem größeren zeitlichen Abstand vor dem In-Kontakt-Bringen. So ist beispielsweise denkbar, die Vorbehandlung schon im Rahmen des Fertigungsprozesses des zweiten Kunststoffes vorzunehmen, um im erfindungsgemäßen Verfahren einen vorbehandelten Kunststoff weiterverarbeiten zu können. Die Vorbehandlung des zweiten Kunststoffes kann auch den Auftrag des Primers auf die zweite Fügezone beinhalten. Dabei ist vorzugsweise auch eine Vorwärmung der zweiten Fügezone vor dem Auftrag des Primers denkbar. Die obigen Ausführungen sind an dieser Stelle ebenfalls bevorzugt.

Es schließt sich an das oberhalb beschriebene In-Kontankt-bringen von zweiter Fügezone und Primer ein Fügeprozess an, in dem die behandelten und/oder beschichteten Fügepartner durch Wärmezufuhr plastifiziert und vorzugsweise unter Einwirkung von Druck miteinander stoffschlüssig verbunden werden. Denkbar ist für diese stoffschlüssige Verbindung der zweiten Fügezone mit dem Primer der Einsatz einer Wärmezufuhr mittels Wärmeleitung, beispielsweise mittels Heizelementschweissen und/oder Wärmekontaktschweißen und/oder Wärmeimpulsschweißen;

durch Reibung, insbesondere Ultraschall-, Reib-/Vibrations- oder Hochfrequenzschweissen; Mikrowellen- oder Induktionsschweißen; durch Konvektion, wie beispielsweise Warmgas- oder Heissgasschweissen; mittels Strahlung, beispielsweise Infrarot-, Laserstumpf- oder Laserdurchstrahlschweissen oder auch durch Kombination zweier oder mehrerer dieser Techniken.

Ein weiterer Gegenstand dieser Erfindung sind gemäß dem erfindungsgemäßen Verfahren hergestellte Gegenstände bzw. Produkte.

Außerdem ist Gegenstand dieser Erfindung die Verwendung eines erfindungsgemäßen Primers zur Verschweißung von zwei Polyamid-Kunststoffen.

Ausführunqsbeispiele

PA = Polyamid
PA 6 = Polycaprolactam
PA 12 = Poly-lauryllactam
MAH = Maleinsäureanhydrid
MIBK = Methylisobutylketon
CH = Cyclohexanon
PS = Polystyrol mit Mw = 192000 g/mol
Copolymer SM1 = Styrol-Maleinsäureanhydrid-Copolymer mit 15 Gew.-% MAH und Mw = 170000 g/mol
Copolymer SM2 = Styrol-Maleinsäureanhydrid-Copolymer mit 8 Gew.-% MAH und Mw = 250000 g/mol
Copolymer SM3 = Poly(styrol-co-maleinsäure), partiell isobutyl/methyl verestert mit Mw = 180000 g/mol
US = Ultraschallschweißen

Herstellung der Primer 1-4:

Zur Herstellung der Primer wurden die Polymerkomponenten durch mechanisches Rühren im Lösungsmittel bei 90 °C gelöst und auf 20 °C abkühlen lassen. Die Zusammensetzung der Primer in g ist aus der folgenden Tabelle zu entnehmen.

|      | Primer | | | |
|------|----|----|----|------|
|      | 1  | 2  | 3  | 4    |
| PS   | 30 |    |    |      |
| SM1  |    | 30 |    |      |
| SM2  |    |    | 30 |      |
| SM3  |    |    |    | 32,5 |
| MIBK | 50 | 50 | 50 |      |
| CH   | 20 | 20 | 20 | 67,5 |

Allgemeine Versuchsdurchführung:

Verwendet wurde ein AWS-Prüfkörper (American Welding Society) ohne Energierichtungsgeber. Die untere Prüfkörperhälfte besteht aus einer Grundplatte von 50 mm x 12,4 mm x 2,8 mm mit einem mittig angeordneten, senkrechten Steg von 9,4 mm Höhe und 2,5 mm Breite (T-Form). Die obere Prüfkörperhälfte besteht aus eine Grundplatte von 50 mm x 12,4 mm x 2,8 mm mit einem mittig angeordneten, senkrechten Steg von 3 mm Höhe und 2,5 mm Breite (T-Form). Durch Schweißen der Oberflächen der mittleren Stege wird eine Doppel-T-Form erhalten.

Die Primer wurden bei Raumtemperatur auf die Oberfläche (50 mm x 2,5 mm) der unteren Prüfkörperhälfte eines AWS-Prüfkörpers (American Welding Society) ohne Energierichtungsgeber des zu verschweißenden PA12-Kunststoffs aufgetragen. Danach wurde der Primer für 24 Stunden bei Raumtemperatur vom Lösemittel getrocknet. Nach dem Trocknen betrug die Dicke des Primers etwa 0,2 mm. Anschließend wurde die obere Prüfkörperhälfte mit einer Geometrie von 50 mm x 2,5 mm auf Stoß mit der 50 mm x 2,5 mm Oberfläche der unteren Prüfkörperhälfte verschweißt. Die Zugfestigkeit wurde nach 24 Stunden bei einer Zuggeschwindigkeit von 5 mm/s bestimmt. Die nachfolgende Tabelle gibt jeweils für die Kombination von Primer mit verwendeten Kunststoffen an, welche Zugfestigkeit (in MPa) bei Raumtemperatur für die verschweißten Probekörper erhalten werden konnte:

Ultraschallschweißen:

| Primer | Polymer 1 | Polymer 2 | Zugfestigkeit MPa (US) |
|---|---|---|---|
| Ohne Primer | PA12 Grilamid TRS 90 | PA6 Grilamid TR30LS | 4,06 |
| 1 | PA12 Grilamid TRS 90 | PA6 Grilamid TR30LS | 3,91 |
| 2 | PA12 Grilamid TRS 90 | PA6 Grilamid TR30LS | 6,43 |
| 3 | PA12 Grilamid TRS 90 | PA6 Grilamid TR30LS | 7,73 |
| 4 | PA12 Grilamid TRS 90 | PA6 Grilamid TR30LS | 15,26 |

Die Ergebnisse zeigen, dass die mit einem MAH enthaltenen Primer verschweißten Proben ausgezeichnete Zugfestigkeit aufweisen. Die Versuche ohne Primer oder mit einem Polystyrol als Primer weisen keine ausreichende Festigkeit auf. Zudem ist festzustellen, dass die Primerschicht mit Cyclohexanon als Lösungsmittel keine Bläschen nach dem Verdampfen des Lösemittels aufweisen. Allerdings nimmt die benötigte Zeit zum Verdampfen des Lösemittels mit steigendem Cyclohexanon Anteil in der Formulierung zu.

**Patentansprüche**

1. Verfahren zum Verschweißen von zwei Polyamid-Kunststoffen unter Verwendung eines Primers, wobei der Primer mindestens ein Polymer synthetisiert aus mindestens einem Maleinsäureanhydrid oder Maleinsäureanhydrid-Derivat enthält.

2. Verfahren zum Verschweißen nach Anspruch 1, **dadurch gekennzeichnet, dass** die Polyamid-Kunststoffe ausgewählt sind aus der Gruppe bestehend aus Polyamid 6, Polyamid 6.6, Polyamid 6.10, Polyamid 6.12, Polyamid 10.10, Polyamid 11, Polyamid 12, Polyamid 10.12, Polyphthalamiden, optisch transparenten Polyamiden oder Mischungen auf Basis dieser Polyamide, insbesondere der erste Fügepartner aus den Polyamid-Kunststoffen aus der Gruppe aus Polyamid 6, Polyamid 6.6, Polyamid 6.10, Polyamid 6.12 ausgewählt ist und/oder der zweite Fügepartner aus den Polyamid-Kunststoffen aus der Gruppe aus Polyamid 10.10, Polyamid 11, Polyamid 12 ausgewählt ist.

3. Verfahren zum Verschweißen nach Anspruch 1 oder 2, **dadurch gekennzeichnet, dass** das Polymer ein Copolymer aus mindestens einem Styrol oder Styrol-Derivat und mindestens einem Maleinsäureanhydrid oder Maleinsäureanhydrid-Derivat ist.

4. Verfahren zum Verschweißen nach Anspruch 3, **dadurch gekennzeichnet, dass** das mindestens eine Copolymer ein molares Verhältnis von Styrol zu Maleinsäureanhydrid von 1:0,01 bis 1:2, bevorzugt 1:0,05 bis 1:1, besonders bevorzugt 1:0,1 bis 1:0,3 aufweist.

5. Verfahren zum Verschweißen nach einem der Ansprüche 1 bis 4, **dadurch gekennzeichnet, dass** das mindestens eine Polymer einen Maleinsäureanhydrid-Gehalt von 0,1 - 50 Gew.-%, insbesondere 0,5 - 40 Gew.-%, bevorzugt 4 - 30 Gew.-%, besonders bevorzugt 8 - 26 Gew.-% bezogen auf das Polymer aufweist.

6. Verfahren zum Verschweißen nach einem der Ansprüche 1 bis 5, **dadurch gekennzeichnet, dass** das mindestens eine Polymer des Primers eine Glasübergangstemperatur Tg von größer 30 °C, insbesondere größer 80 °C, besonders bevorzugt größer 100 °C aufweist.

7. Verfahren zum Verschweißen nach einem der Ansprüche 1 bis 6, **dadurch gekennzeichnet, dass** das mindestens eine Polymer ein gewichtsmittleres Molekulargewicht Mw im Bereich von 5000 - 2000000 g/mol, insbesondere von 50000 - 1000000 g/mol, bevorzugt von 100000 - 500000 g/mol aufweist.

8. Verfahren zum Verschweißen nach einem der Ansprüche 1 bis 7, **dadurch gekennzeichnet, dass** der Primer neben dem ersten Polymer mindestens ein weiteres Polymer enthält, welches zu mindestens einem der beiden zu verschweißenden Kunststoffe kompatibel ist, bevorzugt mindestens ein Polyamid-Polymer.

9. Verfahren zum Verschweißen nach einem der Ansprüche 1 bis 8, **dadurch gekennzeichnet, dass** der Primer mindestens ein Lösungsmittel, insbesondere mindestens ein organisches Lösungsmittel enthält, wobei der Primer vorzugsweise einen Lösungsmittelgehalt von 10 - 90 Gew.-%, insbesondere 50 - 85 Gew.-%, besonders bevorzugt 60 - 80 Gew.-%, jeweils bezogen auf das Gesamtgewicht des Primers, aufweist.

10. Verfahren zum Verschweißen gemäß Anspruch 9, **dadurch gekennzeichnet, dass** das mindestens eine Lösungsmittel einen Dampfdruck bei 20 °C von 1 bis 600 hPa, insbesondere 2 bis 200 hPa, besonders bevorzugt 5 bis 20 hPa aufweist, vorzugsweise das Lösungsmittel ausgewählt ist aus der Gruppe aus Tetrahydrofuran, Mehylisobutylketon (MIBK), Cyclohexanon und Gemischen daraus.

11. Gegenstand hergestellt nach einem Verfahren zum Verschweißen gemäß einem der Ansprüche 1-10.

12. Verwendung eines Primers, wie in einem der Ansprüche 1 - 10 charakterisiert, zur Verschweißung zweier Polyamid-Kunststoffe.

## Claims

1. A method for welding two polyamide plastics materials using a primer, wherein the primer contains at least one polymer synthesized from at least one maleic anhydride or maleic anhydride derivative.

2. The welding method according to claim 1, **characterized in that** the polyamide plastics materials are selected from the group consisting of polyamide 6, polyamide 6.6, polyamide 6.10, polyamide 6.12, polyamide 10.10, polyamide 11, polyamide 12, polyamide 10.12, polyphthalamides, optically transparent polyamides or mixtures based on these polyamides, in particular the first joining part is selected from the polyamide plastics materials from the group of polyamide 6, polyamide 6.6, polyamide 6.10, polyamide 6.12 and/or the second joining part is selected from the polyamide plastics materials from the group of polyamide 10.10, polyamide 11, or polyamide 12.

3. The welding method according to claim 1 or 2, **characterized in that** the polymer is a copolymer of at least one styrene or styrene derivative and at least one maleic anhydride or maleic anhydride derivative.

4. The welding method according to claim 3, **characterized in that** the at least one copolymer has a molar ratio of styrene to maleic anhydride of from 1:0.01 to 1:2, preferably from 1:0.05 to 1:1, particularly preferably from 1:0.1 to 1:0.3.

5. The welding method according to one of claims 1 to 4, **characterized in that** the at least one polymer has a maleic anhydride content of from 0.1 to 50 wt.%, in particular from 0.5 to 40 wt.%, preferably from 4 to 30 wt.%, particularly preferably from 8 to 26 wt.%, based on the polymer.

6. The welding method according to one of claims 1 to 5, **characterized in that** the at least one polymer of the primer has a glass transition temperature Tg of greater than 30 °C, in particular greater than 80 °C, particularly preferably greater than 100 °C.

7. The welding method according to one of claims 1 to 6, **characterized in that** the at least one polymer has a weight-average molecular weight Mw in the range of from 5,000 to 2,000,000 g/mol, in particular from 50,000 to 1,000,000 g/mol, preferably from 100,000 to 500,000 g/mol.

8. The welding method according to one of claims 1 to 7, **characterized in that** the primer contains, in addition to the first polymer, at least one further polymer which is compatible with at least one of the two plastics materials to be welded, preferably at least one polyamide polymer.

9. The welding method according to one of claims 1 to 8, **characterized in that** the primer contains at least one solvent, in particular at least one organic solvent, the primer preferably having a solvent content of from 10 to 90 wt.%, in particular from 50 to 85 wt.%, particularly preferably from 60 to 80 wt.%, in each case based on the total weight of the primer.

10. The welding method according to claim 9, **characterized in that** the at least one solvent has a vapor pressure at 20 °C of from 1 to 600 hPa, in particular from 2 to 200 hPa, particularly preferably from 5 to 20 hPa, and the solvent is preferably selected from the group of tetrahydrofuran, mehylisobutylketone (MIBK), cyclohexanone and mixtures thereof.

**11.** An object produced using a welding method according to one of claims 1 to 10.

**12.** The use of a primer, as **characterized in** one of claims 1 to 10, for welding two polyamide plastics materials.

**Revendications**

**1.** Procédé de soudage de deux matières plastiques à base de polyamide à l'aide d'un primaire, le primaire contenant au moins un polymère synthétisé à partir d'au moins un anhydride d'acide maléique ou d'un dérivé d'anhydride d'acide maléique.

**2.** Procédé de soudage selon la revendication 1, **caractérisé en ce que** les matières plastiques à base de polyamide sont choisies dans le groupe constitué par le polyamide 6, le polyamide 6.6, le polyamide 6.10, le polyamide 6.12, le polyamide 10.10, le polyamide 11, le polyamide 12, le polyamide 10.12, les polyphthalamides, les polyamides optiquement transparents ou les mélanges à base de ces polyamides, le premier partenaire d'assemblage étant notamment choisi dans le groupe constitué par le polyamide 6, le polyamide 6.6, le polyamide 6.10 et le polyamide 6.12 et/ou le second partenaire d'assemblage étant choisi dans le groupe constitué par le polyamide 10.10, le polyamide 11 et le polyamide 12.

**3.** Procédé de soudage selon la revendication 1 ou 2, **caractérisé en ce que** le polymère est un copolymère d'au moins un styrène ou un dérivé de styrène et d'au moins un anhydride d'acide maléique ou un dérivé d'anhydride d'acide maléique.

**4.** Procédé de soudage selon la revendication 3, **caractérisé en ce que** l'au moins un copolymère présente un rapport molaire de 1:0,01 à 1:2 entre le styrène et l'anhydride d'acide maléique, de préférence de 1:0,05 à 1:1 et de manière particulièrement préférée de 1:0,1 à 1:0,3.

**5.** Procédé de soudage selon l'une des revendications 1 à 4, **caractérisé en ce que** l'au moins un polymère présente une teneur en anhydride d'acide maléique de 0,1 à 50 % en poids, en particulier de 0,5 à 40 % en poids, de préférence de 4 à 30 % en poids et de manière particulièrement préférée de 8 à 26 % en poids, par rapport au polymère.

**6.** Procédé de soudage selon l'une des revendications 1 à 5, **caractérisé en ce que** l'au moins un polymère du primaire présente une température de transition vitreuse Tg supérieure à 30 °C, en particulier supérieure à 80 °C et de manière particulièrement préférée supérieure à 100 °C.

**7.** Procédé de soudage selon l'une des revendications 1 à 6, **caractérisée en ce que** l'au moins un polymère présente un poids moléculaire moyen Mw dans la plage de 5 000 à 2 000 000 g/mol, en particulier de 50 000 à 1 000 000 g/mol et de préférence de 100 000 à 500 000 g/mol.

**8.** Procédé de soudage selon l'une des revendications 1 à 7, **caractérisé en ce que** le primaire contient, en plus du premier polymère, au moins un autre polymère, lequel est compatible à au moins l'un des deux matières plastiques à souder, de préférence au moins un polymère de polyamide.

**9.** Procédé de soudage selon l'une des revendications 1 à 8, **caractérisé en ce que** le primaire contient au moins un solvant, en particulier au moins un solvant organique, le primaire présentant de préférence une teneur en solvant de 10 à 90 % en poids, en particulier 50 à 85 % en poids et de manière particulièrement préférée de 60 à 80 % en poids, dans chaque cas par rapport au poids total du primaire.

**10.** Procédé de soudage selon la revendication 9, **caractérisé en ce que** l'au moins un solvant présente une pression de vapeur à 20 °C de 1 à 600 hPa, en particulier de 2 à 200 hPa et de manière particulièrement préférée de 5 à 20 hPa, le solvant étant de préférence choisi dans le groupe constitué par le tétrahydrofurane, la méthylisobutylcétone (MIBK), la cyclohexanone et des mélanges de ceux-ci.

**11.** Objet fabriqué selon un procédé de soudage conformément à l'une des revendications 1 à 10.

12. Utilisation d'un primaire selon l'une des revendications 1 à 10 pour souder deux matières plastiques à base de polyamide.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1757431 A1

- WO 02090425 A1

**In der Beschreibung aufgeführte Nicht-Patentliteratur**

- **CHARLES M. HANSEN.** Hansen Solubility Parameters: A User's Handbook. Taylor & Francis Group, 2007